# EUROPEAN PATENT APPLICATION

(11) **EP 4 778 830 A1**
(43) Date of publication of application: **22.07.2026**
(21) Application number: 25206407.6
(22) Date of filing: 02.10.2025
(51) Int. Cl.: B64C 9/18, B64C 9/02, B64C 9/24

(54) **SUPPORT ASSEMBLY FOR A HIGH LIFT BODY, HIGH LIFT BODY ARRANGEMENT, AS WELL AS WING AND AIRCRAFT COMPRISING SAME**

(30) Priority: 23.10.2024 DE 102024130898
(71) Applicant: AIRBUS Operations GmbH, 21129 Hamburg (DE)
(72) Inventor: Krey, Dennis, 21129 Hamburg (DE); Schlipf, Bernhard, 21129 Hamburg (DE); Tuchtenhagen, Guido, 21129 Hamburg (DE); Rau, Catherine, 21129 Hamburg (DE); Fees, Martin, 21129 Hamburg (DE); Martens, Marko, 21129 Hamburg (DE)
(74) Representative: Airbus Germany

(57) **Abstract**

A support assembly (10) for a high lift body (8), in particular a leading-edge-slat, configured to be mounted to a spar (6) of a wing (3) of an aircraft (1), as well as a corresponding high lift body arrangement (4), a wing (3) and an aircraft (1) are provided, the support assembly (10) comprising at least two hinging organs (30) each providing at least one hinge point (G) configured for hinging the high lift body (8) at the spar (6) movably between a stowed position (S) and a deployed position (T) along a motion path (E) involving a translatory component (I, J, L) extending within a deployment plane (P) extending transversely with respect to a mounting plane (H) provided by the spar (6) for mounting the hinging organs (30) to the spar (6).

## Description

### Technical Field

The present disclosure relates to the field of mounting and actuating high lift bodies of leading-edge devices on aircraft wings. In particular, the disclosure relates to a support assembly for a high lift body, in particular a leading-edge-slat, configured to be mounted to a spar of a wing of an aircraft, to a high lift body arrangement for a wing of an aircraft, to a wing of an aircraft, and to an aircraft.

### Technical Background

High-lift devices are known from the prior art for increasing a lift produced by a wing of an aircraft especially during starting or landing operations, where the aircraft has a speed below its usual cruise speed. The high-lift devices are commonly mechanically movable between a stowed position during normal flight and a deployed position during start or landing. High-lift devices at trailing edges of wings are referred to as flaps, whereas high-lift devices at leading edges of wings are referred to as slats or slots. They can be extended away from the main body of the wing in the deployed position in order to enlarge the wing surfaces and/or alter airflow to enhance the lift provided by the wing.

EP 4 063 257 A1, for example, describes an aircraft wing, including a main wing, a leading-edge high lift assembly including a high lift body, and an assembly connecting the high lift body to the main wing. The high lift body is movable relative to the main wing between stowed and deployed positions. The connection assembly includes at least one rotation element mounted to the high lift body and rotatably mounted to the main wing. The main wing comprises an upper panel with a leading-edge portion and a lower skin panel. The high lift body has a leading and a trailing edge. The high lift body trailing edge moves along the main wing upper skin panel leading edge portion when the high lift body is moved between the stowed and deployed positions. The upper skin panel leading edge portion is elastically deformed when the high lift body is moved from the stowed to the deployed position.

EP 2 726 372 B1 pertains to an airfoil with a main wing, with at least one high-lift body that is arranged on the leading edge of the main wing such that it can be moved between an initial adjusting position and a maximally changed adjusting position referred to the initial adjusting position, with at least one guide mechanism, by means of which the high-lift body is movably coupled to the main wing, and with a driving device for realizing adjusting movements of the high-lift body, wherein the guide mechanism features: - an adjusting lever arrangement with at least one adjusting lever, wherein at least one adjusting lever of the adjusting lever arrangement is coupled to the high-lift body, - at least one first main wing lever that is coupled to the main wing by means of a first main wing pivot joint and to the at least one adjusting lever by means of a first adjusting lever pivot joint such that an effective lever arm is formed between the first adjusting lever pivot joint and the high-lift body, - at least one second main wing lever that is coupled to the main wing by means of a second main wing pivot joint and to the at least one adjusting lever by means of a second adjusting lever pivot joint such that an effective lever arm is formed between the second adjusting lever pivot joint and the first adjusting lever pivot joint, as well as to a method for realizing adjusting movements of a high-lift body relative to a main wing.

US 5 039 032 A describes a highly tapered wing tip extension added to the tip of an existing swept, trapezoidal airplane wing for reducing high speed drag significantly. A smaller, highly swept, extension does not require a leading-edge device to protect against low speed stall. A larger, less swept, extension requires a tapered slat for which two mechanisms are presented.

US 1 353 666 A describes wings and similar members for aeroplane flying machines constructed with a small formerly located auxiliary wing, separated from the main wing to produce a comparatively narrow through slot extending substantially throughout the wing in a direction transversely of the line of flight, third auxiliary wing having its angle of incidence less than the angle of incidence of said main wing, having its nose located at the approximate level of the nose of the main wing, and having its upper rearward edge at approximately the same distance above the court of the main ring is the highest point of the Kimber offset main ring so as to mask the leading portion of said main wing.

Peter K. C. Rudolph, "High-Lift Systems on Commercial Subsonic Airliners", NASA Contractor Report 4746, CONTRACT A46374D(LAS), September 1996, National Aeronautics and Space Administration, gives an overview of different high-lift systems and their application in aeroplane models. According to the report, wing leading edges evolved from fixed leading edges to a simple Krueger flap, and from fixed, slotted leading edges to two- and three-position slats and variable-camber (VC) Krueger flaps. The complexity of high-lift systems probably peaked on the Boeing 747, which has a VC Krueger flap and triple-slotted, inboard, and outboard trailing-edge flaps. Since then, the tendency in high-lift system development has been to achieve high levels of lift with simpler devices in order to reduce fleet acquisition and maintenance costs.

A typical problem with high-lift devices known from the prior art, in particular for slats, is that in their deployed position there is a slot between the slat and the main wing. Air flowing through that slot from below can replace a boundary layer of the air stream flowing at relatively high speed around the leading edge of the slat. The air can lose a relatively large amount of its kinetic energy due to surface friction drag. Thereby, the overall drag of the wing is increased.

For reducing drag, measures like flexible panels are used according to the prior art, for example, for closing said slot between the slat and the main wing, such as in droop noses providing movable slot-less leading edges increasing the high-lift-performance of a profile. On the one hand, this may be problematic in that the airflow can still be influenced in a way that unwanted suctions arise in an area around the flexible panel. On the other hand, difficulties can arise from the connection of the main wing to the slat and/or flexible panel that their mechanical coupling leads to unwanted tensions and torsions along the wing. Above that, applying mechanics known from the prior art for deploying slats may not be easily adapted for use with high-aspect ratio wings which are usually shallower and narrower than conventional wings for fixed wing aircraft.

### Summary

It may thus be seen as an object to reduce the drag of deployed high lift bodies. Furthermore, it can be seen as an object, to improve the mechanic behaviour of a wing provided with a high lift body. Moreover, it can be seen as an object to provide high-lift bodies for high-aspect ratio wings. These objects are at least partly achieved by the subject-matter of the independent claims.

According to an aspect, a support assembly for a high lift body, in particular a leading-edge-slat, configured to be mounted to a spar of a wing of an aircraft, comprising at least two hinging organs each providing at least one hinge point configured for hinging the high lift body at the main body movably between a stowed position and a deployed position along a motion path involving a translatory component extending within a deployment plane extending transversely with respect to a mounting plane provided by the main body for mounting the hinging organs to the main body.

According to an aspect, a high lift body arrangement for a wing of an aircraft is provided, comprising at least one high lift body, in particular a leading-edge-slat, configured to be attached to a corresponding support assembly.

According to an aspect, a wing for an aircraft is provided, comprising at least one corresponding high lift body arrangement.

According to an aspect, an aircraft is provided, comprising at least one wing.

The spar may be provided at a main body of the wing. The main body may be configured such that it comprises a fixed section and a foldable section, such as a foldable wing tip. A leading-edge device, such as a slat, on the wing tip area of high aspect ratio wings can provide a better overall solution and/or increase optimum span, by helping to maintain attached flow within the required low speed flight envelope. At the same time, the height of the support assembly may be reduced such that it allows for wings with shallow profile sections, which is particularly helpful for high-aspect ratio wings.

In the case that moveable high lift bodies are needed in wing areas with restricted integrations space, like on the tips of high aspect ratio wings, classical kinematic approaches, such as slat tracks cannot always fulfil respective requirements, especially on the leading-edge area (aerodynamic driven target setting of high lift device, movement, etc.) while respecting all design boundaries (mechanism fits into wing loft, Keep-out-zones, etc). In particular high aspect ratio wings respective aerodynamics may raise a need for devices on the tips to ensure the overall aircraft performance, the mentioned issues with classical kinematic concepts require new kinematic approaches for movable devices in such regions. To face these issues, the proposed solution enables a simple translating slat mechanism as a novel kinematic approach to what is usually known according to the prior art.

As implied by the name, the kinematic concept introduced by the proposed solution enables a strict translating motion of the high lift device while being deployed. In contrast to that, kinematic approaches for leading edge devices as known from the prior art commonly rely on a circular motion around a defined hinge-line. By transforming this circular motion into a linear translation of the device, the needed integration space can be reduced in that instead of moving around a hinge-line, the simple translation slat glides along a virtual deployment plane, which is defined by the support mechanism.

In other words, the high-lift body delineates the deployment plane when moving from the stowed position into the deployed position and vice versa. The deployment plane can have a trapezoid and/or arch-like shape, for example, in that it takes the form of an arch-section. Each of the hinge points can provide a respective hinge axis, for example, in the form of a respective rotational axis, enabling the overall translatory movement of the high lift body. The meaning of the expression transverse extension of the deployment plane with respect to the mounting plane provided by the spar should be understood as encompassing any perpendicular and/or slanted orientation of the deployment plane with respect to the mounting plane.

The proposed solution thus provides a simple translating slat and respective embodiments thereof. Any installation space and performance issues can be tackled by the enabled novel kinematic approach, providing a wide range of design parameters for optimisation and which can be realised with multiple design principles. This in turn allows to integrate functional leading-edge kinematics into a very restricted space (e.g., small wing space at wing tips), respecting the given aerodynamic targets (device deployment, device movement) by providing an adjustable design with several open parameters to influence the needed device trajectory while ensuring to not penetrate the wing loft with the mechanism.

By combining the features of the embodiments described herein as required or desired, the simple translating device mechanism is able to cover a wide range of possible configurations and targets while respecting integration, stress as well as design boundaries and requirements. The large number of design parameters offers a fairly large optimization room to find kinematic solutions for several target ranges, which might be desirable for high aspect ratio wings in the wing tip area. The proposed simple translating mechanism may also be applied to folding wingtips.

Advantages of the proposed solution therefore lie in that it enables kinematics suitable for small integration spaces, while providing a variety of design parameters to tailor kinematic and device behaviour to specific needs, i.e., a great range for optimisation, according to respective aerodynamic targets. Furthermore, certain manufacturing/design boundaries, e.g., like staying inside the wing loft, can be kept. Moreover, the solution allows for translatory movements of the high lift body which are customisable by changing lateral movements thereof.

Further developments can be derived from the dependent claims and from the following description. Features described with reference to devices and arrangements may be implemented as method steps, or vice versa. Therefore, the description provided in the context of the aircraft and its components apply in an analogous manner also to respective methods. In particular, the functions of the aircraft and of its components may be implemented as method steps of the methods and the method steps may be implemented as functions of the aircraft and its components.

According to an embodiment of a support assembly, the motion path involves a downward component, a lateral component and/or a forward component with respect a travel direction, respectively, of the aircraft. This allows for customising the motion path according to respective requirements and constraints. Different components of the movement may be optimised along the motion path. This further helps in achieving respective aerodynamic targets.

According to an embodiment of a support assembly, translatory components provided by the at least two hinging organs have different lengths when moving the high lift body from the stowed position into the deployed position. For example, the lengths of the hinge arms may be different for hinge organs located inboard and hinge organs located outboard, whereby the leading edge provided by the high lift body can travel different distances at respective hinging organs. The deployment plane can thus have a trapezoid shape.

In other words, a leading edge, and a trailing edge of the deployment plane each lie on a respective surface line of a virtual cone. The motion path can be inscribed as a cross-sectional line between opposing sides of the virtual conical surface. A rotation point of the high lift body defines a virtual tip of the cone. To provide an equivalent to a conical motion of a rotational slat, the translating slat might have a different amount of translation along the span. Thereby, achieving respective aerodynamic targets may be further facilitated.

According to an embodiment of a support assembly, wherein each of the at least two hinging organs provides at least two rotational axes for enabling the translatory component. The at least two hinge points may be located and configured at the hinging organs as required for providing a rotational axis each. This further increases customisability of the support assembly according to keep respective mechanical boundaries while meeting aerodynamic targets.

According to an embodiment of a support assembly, wherein at least one of the at least two hinging organs is configured as a folding hinge for folding the support assembly in a folded state between the high lift body and the main body. Thereby, an installation space required by the support assembly can be significantly reduced. This further helps in integrating functional leading-edge kinematics into a very restricted space (e.g., small wing space at wing tips).

According to an embodiment of a support assembly, the support assembly further comprises spar brackets having a base section for mounting the support assembly to the spar of the main wing and providing a spar joint angled with respect to the base section under a deployment angle of the deployment plane with respect to a front face of the spar. The deployment angle may be adapted to specific aerodynamic requirements. This further helps in enhancing customisability of the support assembly.

According to an embodiment of a support assembly, the support assembly further comprises device brackets having an attachment section for attaching the high lift body to the support assembly and providing a device joint angled with respect to the attachment section under an opposite angle inclining the high lift body upward with respect to the spar. In other words, the opposite angle can be employed such that the leading-edge of the high lift body can be tilted upward and thus in an opposite direction as provided by the deployment angle. Thereby, the deployment angle of the deployment plane may be at least partially compensated. This further helps in meeting respective aerodynamic targets.

According to an embodiment of a support assembly, the deployment angle and the opposite angle constitute vertically opposite angles. For example, the deployment angle and the opposite angle may essentially compensate each other. This enables a translatory movement of the high lift body with respect to the spar. As deployment angle and the opposite angle constitute vertically opposite angles, the pitch of the high lift body remains unchanged during deployment. Thereby, the main wing and a high lift body may maintain essentially parallel wing chords during deployment of the high lift body. In other words, the wing cords of the main wing and of the high lift body can remain at the same angle with respect to each other. This may further facilitate meeting respective aerodynamic targets.

According to an embodiment of a support assembly, the at least two hinging organs include at least one master station with at least one fixed bearing and at least one floating station with at least one floating bearing movable with respect to the fixed bearing in a lateral direction of the main body and/or the high lift body. Each of the at least one master station and the at least one floating station is providing at least one of the hinge points, respectively. The master station may be provided as an activated massive station or a non-activated master station. The floating station can be provided as an activated or a non-actuated floating station, in particular, a slave station, depending on mechanical determination and/or actuation by the master station. The floating bearing allows for flexibly adjusting lateral distances between an interface point, such as a spar bracket or a device bracket, and a hinge arm attached to that interface point. Respective distances can vary in the lateral direction between the stowed position and the deployed position. This helps in defining degrees of freedom of the support assembly such that the one hand, in particular forces acting a transverse direction along the wing can be supported, while at the same time a rotational and/or translational decoupling of the high lift body from wing box deflections can be provided to avoid restraint stresses. Thereby, the mechanic behaviour of a wing provided with a high lift body can be improved.

According to an embodiment of a support assembly providing an alternative, or additional solution, the at least one floating station comprises a limiting element limiting a movement at at least one hinge point provided by the floating bearing. The limiting element can engage a limiting section formed at a spar bracket and/or device bracket. For example, the limiting element can be formed as a lug or pin extending into the limiting section. A link or rod may be provided with the limiting element. The limiting section may provide at least one limit stop limiting the movement of the limiting element. The at least one limit stop can be provided by a side face of a cavity or receptacle providing the limiting section. Thereby, a spanwise space allocation for the support assembly as well as stopper loads can be reduced, further helping to reduce overall installation space required by the support assembly.

Furthermore, in order to cover failure cases a sub-master station may be introduced in addition to the master and slave stations. Under normal operating conditions, the sub-master stations can function as normal slave stations, but in case of a potential failure in the master station, the sub-master stations may become master stations to avoid any uncontrolled (unguided) behaviour of the high lift body in motion. The sub-master station can be designed, by adjusting an existing master (or even slave) station as described before with the additional limiting elements. Thereby, functional reliability of the support assembly can be further increased.

According to an embodiment of a high lift body arrangement providing an alternative, or additional solution, the high lift body comprises a main section and an extension section which is configured to be telescopable with respect to the main section for elongating a leading edge of the wing in the deployed position. The telescoping movement of the extension section may be carried out in an opposite direction as a lateral movement of the main section. Such lateral movements or motions of high lift bodies can be of great interest for wings, which have different sweep angles along the wingspan, since it allows any high lift body to close a sidewise gap to a second device, such as another high lift body, without a complex rearrangement of the kinematics. An overall sidewise distance can be restricted by several factors, like the maximum link length, the usable cycle ratio and - connected to both - the available design and integration space. In some cases, it might be desired or required to further extend the sidewise motion of a device, such as a high lift body, e.g., to protect the airflow in different angles of attack especially in areas of the wing sweep transition, which is provided by the proposed solution.

This solution introduces a principle to enlarge any movable device, such as high lift body in the form of a slat, or alike, on a wing during its deployment, e.g., to bridge gaps between two devices and/ or to protect the airflow in areas of wing sweep transition, as mentioned above. The extension section that provides a device enhancement, for example the form of a shield or a device that is smaller than the main section and can be hidden inside the main section in a retracted position. The extension section can be linked to the main section kinematic by a n-bar linkage (or a sliding link), to couple it in a way to the main section that, if the main section is deployed, the extension section can be actuated and deployed.

The actuation and deployment of the main section and the extension section can be carried out synchronously. A respective coupling of the kinematics of the main section and the extension section can be achieved in different ways, depending on the aerodynamic needs or the occurring space restrictions. For example, the extension section may be deployed during main section deployment (direct coupling), and/or the extension section can be deployed after the main section is being deployed into respective target position which can be defined, for example, by means of an end-stop coupling.

Alternatively, or additionally, is also possible to decouple the movement of the extension section from the main section by integrating an actuator dedicated for driving the extension section independently of the main section. Extension sections of neighbouring high lift bodies may be deployed in opposite directions in order to close a gap between them. Such gaps may be laterally closed from two sides by respective extension sections being deployed from respective main sections in opposite directions to possibly abut each other in the extended position and thus fully close the gap.

The proposed solution allows for integrating an extension section for device enhancement into a wing in a movable manner, and for linking it to an overall deployment movement of the device, such as a high lift body, so that the device itself becomes larger (longer) during deployment. This solution helps bridging sidewise gaps to other devices, which cannot be closed according to the prior art. The bridging extension section can protect the airflow especially in areas of different wing sweep angles. Overall, solutions involving extension sections of high lift bodies, enhance customisability of the high lift body to meet respective aerodynamic targets can be further improved as desired or required.

Advantages of the solution lie in that it further enables to provide kinematics which are suitable for small integration spaces, e.g., in cases where high lift bodies and their enhancements are arranged in the region of wing tips. In particular, protection of airflow by bridging gaps to other devices, even if they are located in areas of different wing sweep without complex changes to kinematic system can be provided. A variety of design parameters enable to tailor kinematics and device behaviour according to specific needs and requirements (great range for optimisation) to meet aerodynamic targets. Moreover, the solution facilitates keeping manufacturing/design boundaries, e.g., like staying inside a wing loft.

According to an embodiment of a high lift body arrangement, a telescoping arrangement for telescoping the high lift body comprises a guide track and/or a bar linkage for telescoping the extension section configured to be coupled to the support assembly and/or to an actuation assembly for actuating the high lift body. In other words, when the main section is in the deployed position, the extension section can reach its target position and enlarge an overall length of the high lift body. This further helps in improving the aerodynamic behaviour of the wing.

### Brief Description of the Drawings

The subject matter will hereinafter be described in conjunction with the following drawing figures, wherein like numerals denote like elements, and wherein:
Fig. 1 is a schematic top view of an aircraft having wings provided with high lift body arrangements.
Fig. 2 is a schematic top view of a detail II of a wing of the aircraft depicted in Fig. 1.
Fig. 3 is a schematic top view of a mechanical substitution model of a wing of the aircraft comprising a support assembly for a of a high lift body arrangement.
Fig. 4 is a schematic perspective view of an embodiment of a motion path lying in a deployment plane of the support assembly.
Fig. 5 is a schematic top view of a mechanical substitution model of embodiments of two support stations of a support assembly for a high lift body arrangement.
Fig. 6 is a schematic top view of a mechanical substitution model of further embodiments of two support stations a of support assembly for a high lift body arrangement.
Fig. 7 is a schematic top view of a mechanical substitution model of another embodiment of a support station of a of support assembly for a high lift body arrangement.
Fig. 8 is a schematic top view of a mechanical substitution model of another embodiment of a support station of a of support assembly for a high lift body arrangement.
Fig. 9 is a schematic top view of a mechanical substitution model of a further embodiment of a support assembly for a high lift body arrangement comprising a number of support stations.
Fig. 10 is a schematic top view of a mechanical substitution model of additional embodiments of two support stations of a support assembly for a high lift body arrangement.
Fig. 11 is a schematic top view of a mechanical substitution model of a another embodiment of a support assembly for a high lift body arrangement comprising a number of support stations.
Fig. 12 is a schematic top view of a mechanical substitution model of a further additional embodiment of a support station of a support assembly for a high lift body arrangement.
Fig. 13 is a schematic top view of a mechanical substitution model of a high lift body arrangement comprising a deflection limiter.
Fig. 14 is a schematic perspective view of an embodiment of a high lift body arrangement comprising a number of support stations.
Fig. 15 is a schematic perspective view of a master support station in a stowed position.
Fig. 16 is a schematic perspective view of a master support station in a deployed position.
Fig. 17 is a schematic perspective view of a master support station in a stowed position.
Fig. 18 is a schematic perspective view of a slave support station in a deployed position.
Fig. 19 is a schematic perspective view of a spar bracket of a support station comprising a limiting element.
Fig. 20 is a schematic perspective partly cross-sectional of view of a support station comprising a limiting element.
Fig. 21 is a schematic perspective partly cross-sectional of view of a support station configured as a sub-master station comprising a limiting element in a neutral position.
Fig. 22 is a schematic perspective partly cross-sectional of view of a support station configured as a sub-master station comprising a limiting element in a nominal position.
Fig. 23 is a schematic top view of a mechanical substitution model of an embodiment of a high lift body arrangement comprising a high lift body having a main section and an extension section in a retracted position.
Fig. 24 is a schematic top view of a mechanical substitution model of an embodiment of a high lift body arrangement comprising a high lift body having a main section and an extension section in a semi-deployed position.
Fig. 25 is a schematic top view of a mechanical substitution model of an embodiment of a high lift body arrangement comprising a high lift body having a main section and an extension section in a deployed position.

### Detailed Description of the Drawings

The following detailed description is merely exemplary in nature and is not intended to limit the invention and uses of the invention. Furthermore, there is no intention to be bound by any theory presented in the preceding background or the following detailed description. The representations and illustrations in the drawings are schematic and not to scale. Like numerals denote like elements. A greater understanding of the described subject matter may be obtained through a review of the illustrations together with a review of the detailed description that follows.

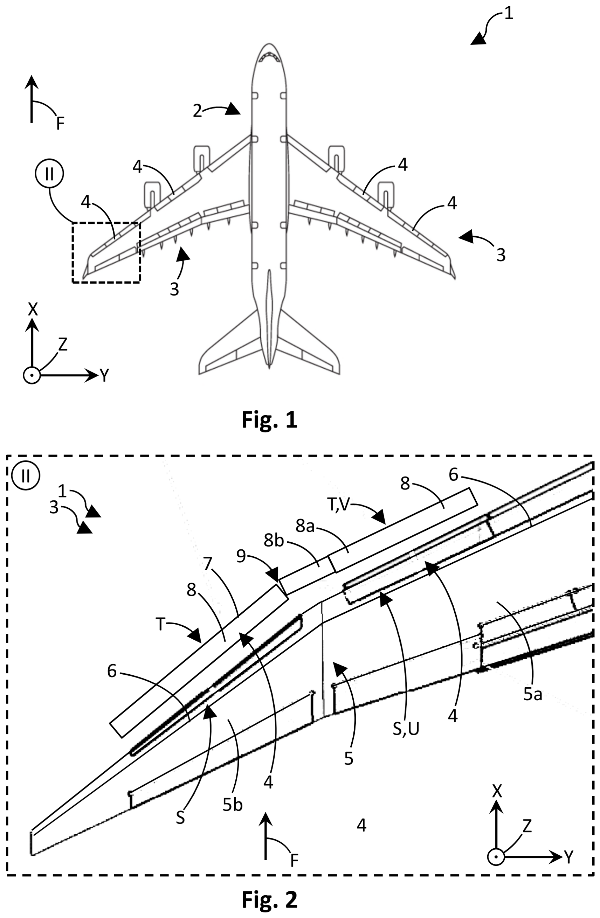

Fig. 1 shows a schematic top view of an aircraft 1 having a fuselage 2 provided with wings 3 having lift body arrangements 4. The aircraft 1 extends in a longitudinal direction X, a transverse direction Y and a height direction Z together constituting a Cartesian coordinate system. The aircraft 1 is configured to travel in a travel direction F running essentially in parallel with the longitudinal direction X, in particular in the air, where the travel direction F is essentially a direction of flight of the aircraft 1.

Fig. 2 shows a schematic top view of a detail II of one of the wings 3 of the aircraft 1 depicted in Fig. 1 comprising a number of high lift body arrangements 4 attached to a main body 5 of the wing 3, in particular a spar 6 thereof, for example a front spar. The main body 5 of the wing 3 may comprise a fixed section 5a and a foldable section 5b, for example, in the form of a foldable wingtip. Each of the high lift body arrangements 4 provides a leading edge 7 for the wing 3. In operation, the aircraft 1 travels in the travel direction F, and an air stream (not shown) flows towards the leading edge 7 in a direction opposite to the travel direction F.

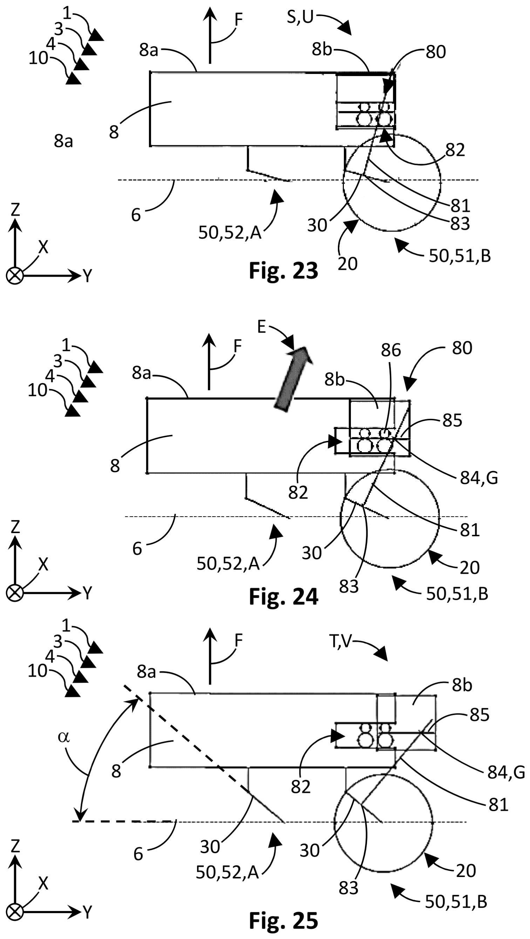

The high lift bodies arrangements 4 are shown in a stowed position S where high lift bodies 4 of the high lift body arrangements 4 are retracted into the wing 3, and in a deployed position T where they protrude from the main body 5 in the travel direction F to enhance the lift off the wing 3 acting upon the aircraft 1 essentially in the height direction 1. The high lift body arrangements 4 each comprise at least one high lift body 8 providing the leading-edge 7. The high lift body 8 may comprise a main section 8a and an extension section 8b. In a retracted position U, the extension section 8b may laterally protrude from the main section 8a in order to close a gap 9 between two adjacent high lift body arrangements 4 (see Figs. 23 to 25).

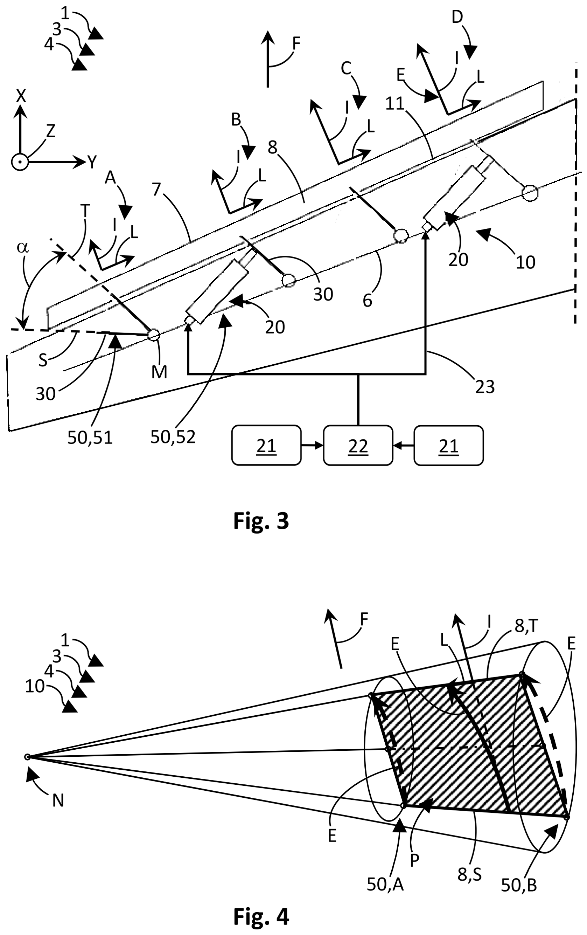

Fig. 3 shows a schematic top view of a mechanical substitution model of a wing 3 of the aircraft 1 comprising a support assembly 10 for a of a high lift body arrangement 4. The high lift body arrangement 4 comprises the high lift body 8, and a support assembly 10 connecting the high lift body 8 to the spar 6 of the main body 5 of the wing 3 movably between the stowed position S and the deployed position T.

The high lift body 8 has comprises a spar 11 via which the high lift body 8 can be mounted to the support assembly 10. A drive organ 20 of the support assembly 10 is connected to two motor control units 21 via a power control unit 22 by means of transmission lines 23 for transmitting power and/or data between the drive organ 20, the motor control units 21 and/or the control unit 22. The drive organ 20 connects to a hinging organ 30 of the high lift body arrangement 4 for moving the high lift body 8 between the stowed position S and the deployed position T.

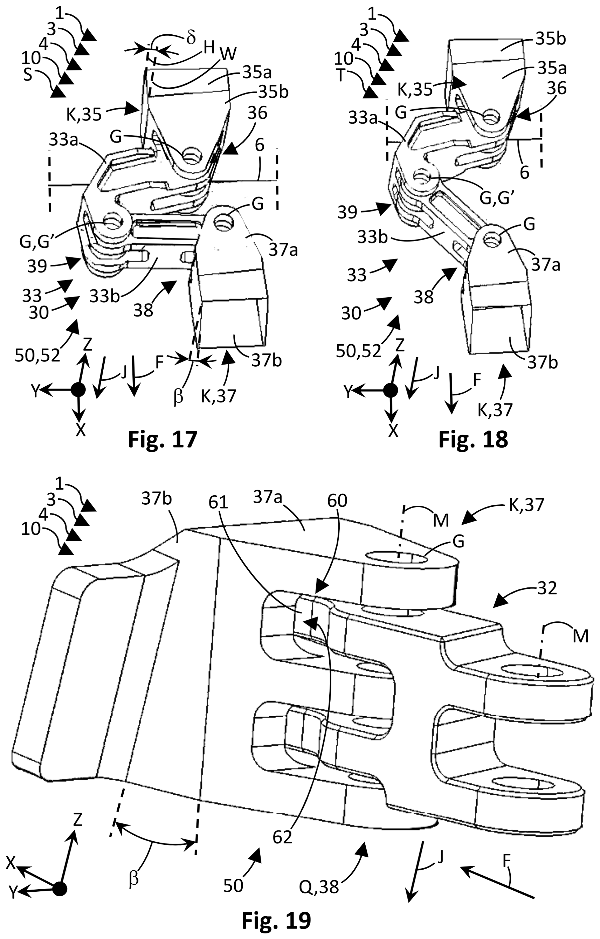

The drive organs 20 and hinging organs 30 can be combined in support station 50 of the high lift body arrangement 4. A support station 50 comprising a drive organ 20 may function as a master station 51. A support station 50 without a drive organ 20 may function as a slave station 52. A combined sub-master station 53 may be provided which normally functions as a slave station 52 and may become a master station 51 upon a technical failure in a master station 51 (see Figs. 19 to 22).

In the present example, for support stations 50 are provided, namely a first support station A, a second support station B, a third support station C and a fourth support station D. When being moved between the stowed position S and the deployed position T, the hinging organs 30 of the support stations 50 are each configured to be rotated around a respective rotational axis M with an actuation angle α. Since the hinging organs 30 of the support stations 50 have different lengths, a respective motion path E of the high lift body 8 has different lateral components L and/or forward components I and each of the support stations 50.

Fig. 4 schematic perspective view of an embodiment of an exemplary motion path E lying in a deployment plane P of the support assembly 10. Here it becomes apparent that during deployment from the stowed position S to the deployed position T, the high lift body 8 rotates around a virtual rotational point N being located outside of the wing. The high lift body 8 moves within the deployment plane P which can be inscribed into a cross-section of a virtual cone such that the trailing edge of the deployment plane P defined by the high lift body 8 in the stowed position S and a leading edge of the deployment plane P defined by the head of body 8 deployed position T each lie on a surface line of the virtual cone.

Different support stations 50, such as the first support station A and the second support station B depicted in an exemplary manner in Fig. 4, can have respective different hinging organs 30 providing deployment paths E of different lengths. Thereby, the deployment plane P may have the shape of an arc section along which the high lift body 8 moves when being transferred from the stowed position S into the deployed position T. In other words, the high lift body 8, and/or the leading-edge 7 provided thereby, delineates the deployment plane P as it describes an arc-shaped movement defined by the respective support stations 50 arranged at a certain distance to each other in a lateral direction along the front spar 6 of the wing 3.

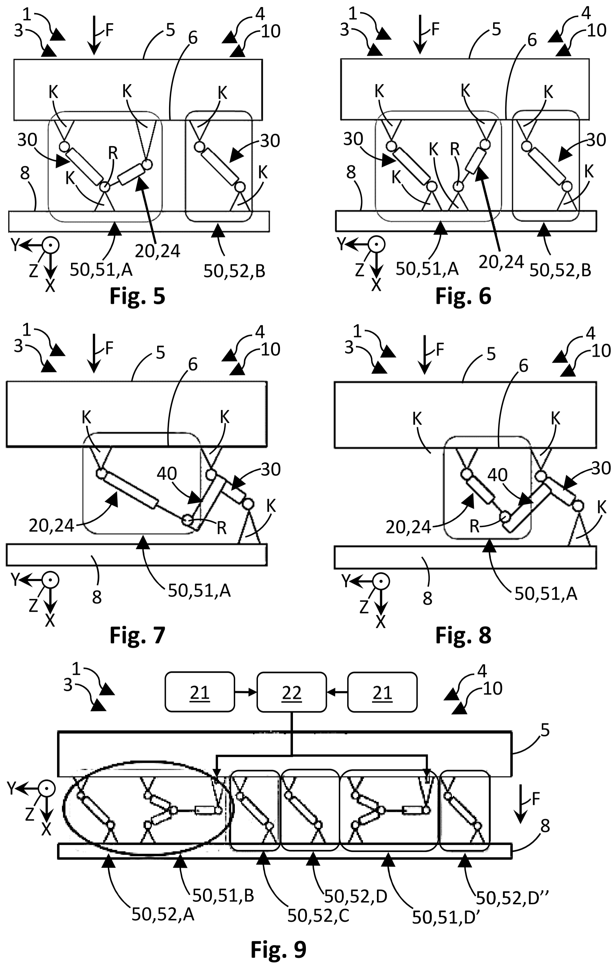

Fig. 5 shows a schematic top view of a mechanical substitution model of embodiments of two support stations 20 of a support assembly for a high lift body arrangement 4. The first support station A is configured as a master support 51 and comprises a drive organ 20 comprising a linear actuator 24 attached to the main body 5 of the wing 3 via a separate bracket K. Each of the hinging organs 30 of the support stations 50 can be connected to the main body 5 of the wing 3 and the high lift body 8 via respective brackets K as well.

Integrating such a linear actuation system involving the linear actuator 24 can be a simple, but useful approach for enabling the simple translating device kinematics providing the motion path E of the high lift body 8. In the present example, the linear actuator 24 is coupled to the front spar 6 with an additional actuation bracket K. The other side of the linear actuator 24 is attached to a drive mounting point R arranged at a bracket K provided at the high lift body 8, which may additionally connect the hinging organ 30 of the support arrangement 10 to the front spar 6.

Fig. 6 shows a schematic top view of a mechanical substitution model of further embodiments of two support stations 50 of a support assembly 10 for a high lift body arrangement 4. As an alternative, the linear actuator 24 can also be attached to a drive mounting point R arranged at a separate bracket K, as long as the bracket K is connected to the high lift body 8. When the linear actuator 24 is now being driven, it pushes the body into the direction guided by the support stations 50.

The linear actuator 24 needs to be coupled in such a way that a rotation around the joint rotational point N is possible to establish the needed degree of freedom for the linear actuator 24. The master station 51 and the slave station 52 each serve as a structural load path. The respective hinging organ 30 of the support stations 50 provide a single load path to all support stations 50.

Such a concept can be transferred to the needed amount of support stations 50 in case the island body arrangement for needs more or less support stations 50. Yet, brackets K supporting drive organs 20, such as a linear actuator 24, can be provided separately from brackets K serving as a part of the structural load path comprising the hinging organs 30. In any case, the linear actuators 24 can be arranged are arranged outboard of the driven support station 50 in both concepts.

Fig. 7 shows a schematic top view of a mechanical substitution model of another embodiment of a support station 50 a of support assembly 10 for a high lift body arrangement 4. Here the linear actuator 24 is mounted to a drive mounting point R arranged at a deflection organ 40, for example, provided in the form of the strut or alike, extending essentially perpendicularly with respect to the actuating direction of the linear actuator 24. The linear actuator 24 can exert a pulling action in order to move the high lift body 8 from the stowed position S to the deployed position T via the deflection organ 40.

Fig. 8 shows a schematic top view of a mechanical substitution model of another embodiment of a support station 50 a of support assembly 10 for a high lift body arrangement 4. Here, the deflection organ is inclined at an angle of more than 90° with respect to the linear actuator 24. Hence, in comparison to the embodiment of the support station 50 shown in Fig. 7, the embodiment of the support station 50 shown in Fig. 8 leaves or less actuation length for the linear actuator 24.

Fig. 9 shows a schematic top view of a mechanical substitution model of a further embodiment of a support assembly 10 for a high lift body arrangement 4 comprising a number of support stations 50. For example, first support station A, a second support station B, third support station C, a fourth support station D, a fifth support station D' and a sixth support station D" are provided. The first support station A, the third support station C, the fourth support station D and the sixth support station D' are configured as slave stations 52. The second support station B and the fifth support station D' are configured as a master stations 51.

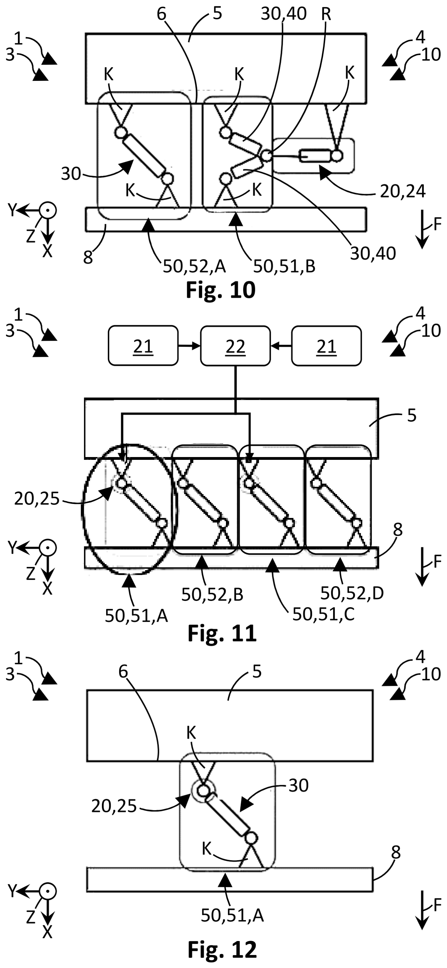

Fig. 10 shows a schematic top view of a mechanical substitution model of additional embodiments of two support stations 50 of a support assembly 10 for a high lift body arrangement 4, for example, comprising the first support station A and the second support station B shown in Fig. 9. A linear actuator 24 of the second support station B is attached to a drive mounting point R arranged between two hinging organs 30 which thereby both become deflection organs 40 for actuating the high lift body 8. The drive mounting point R thereby constitutes a toggle joint, which can enable the separation of the load paths for structure and system. The linear actuator 24 can be oriented such an extent essentially in parallel to front spar 6 of the main wing 5. Thereby, mechanical loads acting upon the linear actuator 24 can be reduced such that they may be almost eliminated in particular in the deployed position T.

Fig. 11 shows a schematic top view of a mechanical substitution model of another embodiment of a support assembly 10 for a high lift body arrangement 4 comprising a number of support stations 50. For example, first support station A, a second support station B, third support station C, and a fourth support station D are provided, which may each serve as a single load path for all items. The first support station A and the third support station C are configured as master stations 51 provided with a drive organ 20 comprising a rotary actuator 25. The second support station B and the fourth support station D are configured as slave stations 52.

Fig. 12 shows a schematic top view of a mechanical substitution model of a further additional embodiment of a support station 50 of a support assembly 10 for a high lift body arrangement 4 comprising the linear actuator 25. For example, the linear actuator 25 is integrated and/or attached to the bracket K connecting the hinging organ 30 of the support station 50 to the front spar 6 of the main body 5 of the wing 3. Thereby, the support section 50, for example, the first support station A shown in Fig. 11, becomes a master station 51.

The rotary actuator 25 can be a placed within a joint between the bracket K and the hinging organ 30 close to front spar 6 of the main body 5 of the wing 3. For example, two master stations 51, such as the first support station A and the third support station D, can be provided with one rotary actuator 25 each. The 2 additional support stations 50 can be provided as slave stations 52, for example the second support station D and a third support station C, merely providing structural load paths. Attentively, or additionally, the gear rotary actuator (GRA) may be provided inside the hinge organ 30, for example, within a strut thereof.

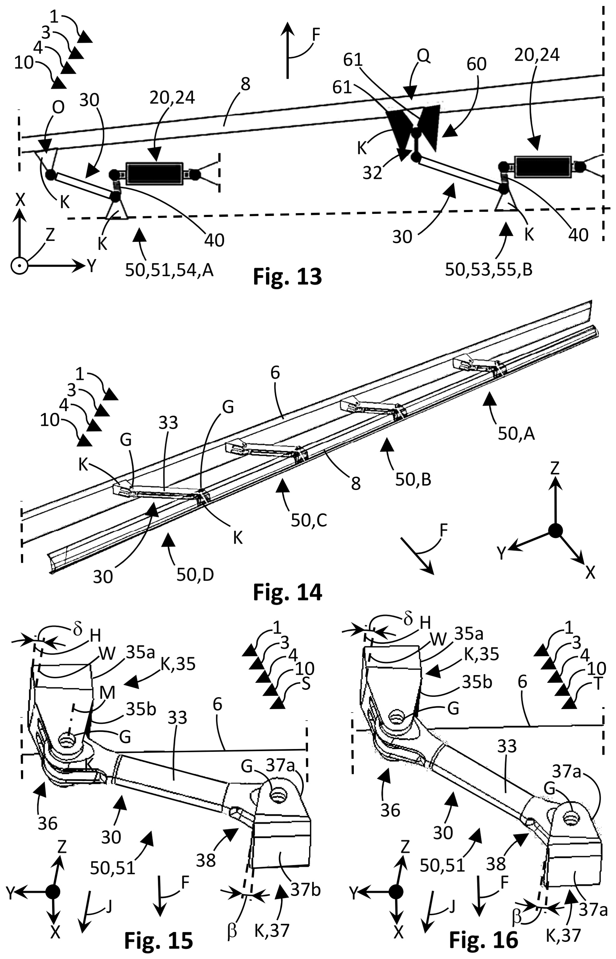

Fig. 13 shows a schematic top view of a mechanical substitution model of a high lift body arrangement 4 comprising a deflection limiter 60 comprising two limiting elements 61 in the form of limiter brackets provided at the bracket K mounted to the high lift body 8. The present example of the high lift body arrangement for, to support stations 50 are provided, namely the first support station A and a second support station B, of comprising a drive organ 20, for example, including a linear actuator 24. The first support station A can be configured as a master station 51 and can be attached to the high lift body 8 via a fixed bearing O, rendering the support station 50 a fixed station 54.

The second support station B can be configured as a sub-master station 53 with the drive organ 20 serving as a backup. Furthermore, this support station 50 can be provided with the floating bearing Q, rendering the support station 50 a floating station 55. The floating bearing Q may comprise the deflection limiter 60 and a link element 32, for example, the form of an H-link, which allows for lateral movements of the high lift body 8 with respect to the support station 30 along a transverse direction Y.

A rotation of the link element 32 in the floating bearing Q can be limited by the deflection limiter 60 in that the respective limiter brackets acting as limiting elements 61 laterally limit a rotation of the link element 32 within the floating bearing Q. In order to cover failure cases, it might be necessary to introduce such a sub-master station 53 in addition to the master and slave definitions. Under normal operating conditions, the sub-master Station 53 may function as a normal slave station 52, but in case of a failure in the master station 51, the sub-master station 53 can become the new master station 51 to avoid an uncontrolled (unguided) behaviour of the motion of the high lift body 8.

Fig. 14 shows a schematic perspective view of an embodiment of a high lift body arrangement 4 comprising a number of support stations 50. For example, first support station A, a second support station B, third support station C, and a fourth support station D are provided, which may each serve as a single load path for all items. Each of the support stations 50 may be configured as a master station 51, a slave station 52, is a sub-master station 53, a fixed station 54 and/or a floating station 55 Comprising drive organs 20, hinging organs 30, and/or, deflection organs 40 and/or deflection limiters 60 as desired or required by a certain application.

In the present example, for the sake of clarity and simplicity, a schematic perspective view of a basic example embodiment of the support station 50 of the high lift body arrangement 4 comprising a support assembly 10 is shown, which may be regarded as being exemplary for any of the embodiments of the high lift body arrangement for shown herein. The hinging organ 30 comprises or is embodied as a hinge arm 33 connected to the brackets K at the front spar 6 and the high lift body 8 via respective hinge points G each allowing for a rotational movement of the hinge arm 33 with respect to the bracket K.

Fig. 15 shows a schematic perspective view of a support station 50 as shown in Fig. 14, for example configured as a master station 51, in a stowed position S. The bracket K attached to the front spar 6 of the main body 5 of the wing 3 may be configured as a spar bracket 35 comprising a base section 35a configured to be attached to the front spar 6 and a joint section 35b providing the hinge point G. The base section 35a and the joint section 35b can be angered with respect to each other under a deployment angle δ extending between the mounting plane H and a joint plane W, extending essentially in parallel of the rotational axis M of the hinge point G provided by the joint section 35b, thus providing an angled spar joint 36. Consequently, when moving the high lift body 8 from the stowed position S into the deployed position T, the respective movement may involve a downward component J in addition to the forward component I in the lateral component L illustrated in Fig. 3.

For attaching the high lift body 8 to the support station 50, the respective bracket K may be configured as a device bracket 37 comprising an attachment section 37a configured to be attached to the high lift body 8 and a joint section 37b providing the hinge point G. The attachment section 35a and the joint section 35b can be angled with respect to each other under an opposite angle β with respect to the deployment angle δ, thus providing an angled device joint 38. Consequently, when moving the high lift body 8 from the stowed position S with the downward component J, wing cords of the main body 5 and the high lift body 8 may remain essentially arranged in parallel to each other.

In other words, a purely translatory movement is enabled along the deployment plane P which is tilted downward by the deployment angle δ in a direction opposite to the height direction Z. The mounting plane H will be mainly defined by a respective mounting surfaces provided by the front spar 6. The deployment angle δ and/or the opposite angle β can have amounts ranging between 0° to 5°, preferably 0° to 10°, maximally 15°.

In an example, the high lift body 8 is defining an inner volume (non-illustrated). The main body 5 of the wing 3 comprises a wing skin defining a leading edge of the wing (non-illustrated). The wing skin defines for example an opening (non-illustrated), the hinging organ 30 connecting for example the spar 6 of the wing 3 and the high lift body 8 through the opening. The support assembly 10 comprises for example a first connector and a second connector (non-illustrated). The first and second connectors are configured for connecting the bracket 37 to the high lift body 8. The first connector is located between the inner volume and the wing skin when the high lift body is in its stowed position S. The second connector is an elongate connector having a longitudinal axis oriented transverse to the leading edge 7 so as to permit translational movement between the high lift body 8 and the connector along the longitudinal axis thereof. The high lift body comprises an opening through which the hinging organ 30 extends such that the second connector is located in the inner volume of the high lift body 8.

Fig. 16 shows a schematic perspective view of the support station 50 shown in Fig. 15 in the deployed position T. Here it becomes apparent, that upon deployment, the hinge arm 33 is rotated clockwise around the hinge point G provided by the spar joint 36, as well as around the hinge point G provided by the device joint 38. Consequently, the device bracket 37 with the high lift body 8 is moved along a translatory motion path E from the stowed position as into the deployed position T as illustrated in Figs. 3 and 4.

Fig. 17 shows a schematic perspective view of a support station 50 as shown in Fig. 14, for example configured as a slave station 52, in a stowed position S.

The support station 50 shown in Fig. 17 differs from the full support stations shown in Fig. 15 and 16 in that the hinge arm 33 comprises an upper arm section 33a and a lower arm section 33b which are connected to each other by an intermediate joint 39 in the manner of an elbow joint. The intermediate joint 39 provides an additional hinge point G which may be configured as a toggle point G'.

The upper arm section 33a can be angled such that a first part of the upper arm section 33a connected to the spar joint 36 extends laterally away from the spar joint 36. A second part of the upper arm section 33a connected to the intermediate joint 39 may be angled with respect to the first part of the upper arm section 33a such that it rather extends from the first part in the travel direction F. Therefore, the upper arm section 33a may have bent, curved, crooked and/or cranked contour in a projection along the joint plane J.

The lower arm section 33b may extend essentially straight between the intermediate joint 39 and the device joint 38. Thus, the lower arm section 33b may be virtually folded into the upper arm section 33a in the stowed position S. Thereby, in the stowed position S, the spar bracket 35 and the device bracket 37 may be located relatively close to each other enabling the support assembly 10 to be accommodated in small installation spaces.

Fig. 18 shows a schematic perspective view of the support station 50 shown in Fig. 7 in the deployed position T. Here it becomes apparent, that upon deployment, the upper arm section 33a is rotated clockwise around the hinge point G provided by the spar joint 36, while the lower arm section 36b is rotated clockwise with respect to the toggle point G' provided by the intermediate hinge 39 as well as around the hinge point G provided by the device joint 38. Consequently, the device bracket 37 with the high lift body 8 is moved along a translatory motion path E from the stowed position as into the deployed position T as illustrated in Figs. 3 and 4.

In the deployed position T, the spar joint 36 may still move in a lateral direction, for example, essentially in parallel to the transverse direction Y, with respect to the device joint 37, thereby rendering the support station 50 a floating station which can be provided as a slave station 52 to the master stations 51 shown in Figs. 15 and 16. Consequently, the spar bracket 35 and the device bracket 37, respectively, allow for a compensation of lateral movements between the high lift body 8 and the front spar 6 in the region of the slave station 52 enabling respective degrees of freedom to minimise mechanical stresses and high lift body arrangement 4. Yet, for providing the desired as that are required degree of stability, any of the hinge points G may be configured as 8 H-links which can take up forces and/or torques acting perpendicularly to the respective rotational axes M upon the hinging organ 30, in particular the hinge arm 33. For enhanced stability of the hinge arms 33 themselves, they may be provided with stiffening elements in the forms of ribs, groins, or alike, which may extend along the outer edges of the hinge arms 33 as depicted in Figs. 17 and 18.

Fig. 19 shows a schematic perspective view of a spar bracket 35 of a support station 50 comprising a limiting element 61. In the present example, the limiting element 61 is provided at the link element 32 and protrudes from the link element 32 into the bracket K, in particular the spar bracket 35, thus rendering the spar joint 36 are floating bearing Q. By providing the limiting element 61 in as an extension on the link element 32 the form of a boss, pin or lug jutting into a cavity provided as a counter limiting element 62 formed at the bracket K, excessive rotations in the area of the device joint 38 can be limited.

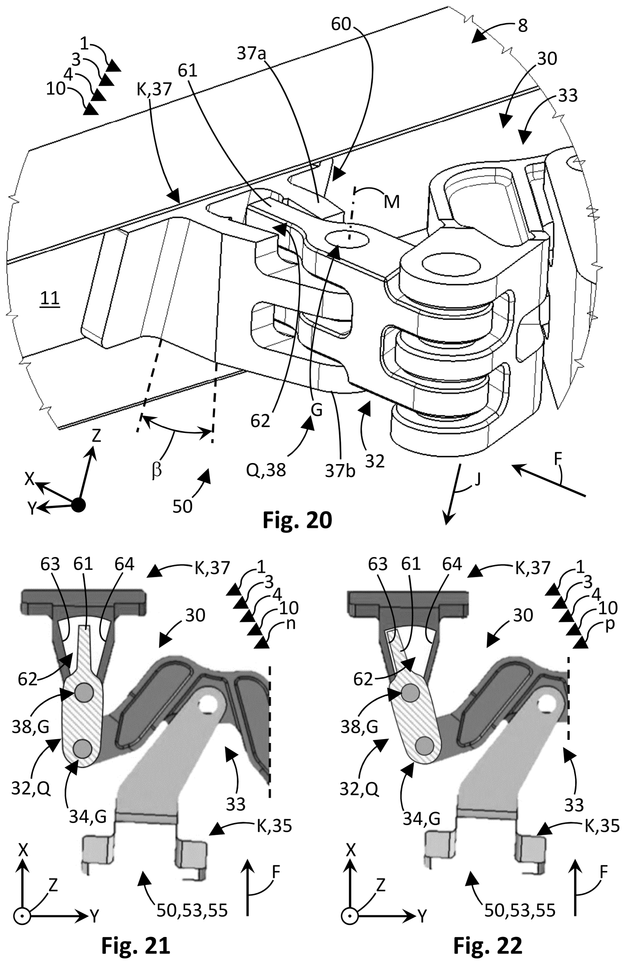

Fig. 20 shows a schematic perspective partly cross-sectional of view of a support station 50 comprising a limiting element 61. The bracket K, for example, the device bracket 37, is provided with the deflection limiter 60 comprising the limiting element 61 arranged at the hinging organ 30, for example in that it is formed at the intermediate link 32 of the hinge arm 33. The limiting element 61 may be formed as lug, pin, or boss extending essentially in parallel to the longitudinal direction X into the counter limiting element 62 formed as a cavity at the bracket K.

Fig. 21 shows a schematic perspective partly cross-sectional of view of a support station 50 configured as a sub-master station 53 comprising a limiting element in a neutral position n. Here it becomes apparent that in the neutral position n, the limiting element 61 is arranged at a distance from first limit stop 63 at a second limit stop 64 formed at the bracket K, for example the device bracket 37. The device bracket thus allows for certain lateral relative movements essentially in parallel to the transverse direction Y between the hinge arm 33 and the spar bracket 37. These relative lateral movements are enabled by the link element 32 being connected to the hinge arm 33 via a link joint 34 serving as another hinge point G and thus providing a floating bearing Q, rendering the support station 50 are floating station 55.

Fig. 22 shows a schematic perspective partly cross-sectional of view of the support station 50 illustrated in Fig. 21 configured as the sub-master station 53 comprising a limiting element 61 in a nominal position p. Here, the limiting element 61 abuts the first limit stop 63. Hence, further relative movements of the hinge arm 33 with respect to the device bracket 37 in the transverse direction Y are inhibited.

Fig. 23 shows a schematic top view of a mechanical substitution model of an embodiment of a high lift body arrangement 4 comprising a high lift body having 8 a main section 8a and an extension section 8b in a retracted position U. The high lift body arrangement 4 comprises support stations 50, for example a first support station A and a second support station B. The first support station A can be configured as a slave station 52. The second support station B can be configured as a master station 51 comprising a drive organ 20.

A telescoping arrangement 80 for telescoping the extension section 8b can be provided at 1 of the support stations 50. The present example, the telescoping arrangement 80 is provided at the second support station B acting as the master station 51. For example, an actuation organ 81, such as a lever or other kind of actuation member can be affixed to the hinge organ 30 of the support station 50 and reach into a guidance 82 provided at the main section 8a for accommodating the extension section 8c within the high lift body 8.

Fig. 24 shows a schematic top view of a mechanical substitution model of an embodiment of the high lift body arrangement 4 comprising the high lift body 8 having the main section 8a and the extension section 8b in a semi-deployed position. While the drive organ 20 drives the hinge organ 30 to move the high lift body 8 along the motion path E from the stowed position S into the deployed position T, the movement of the hinging organ 30 can be transferred to the actuation organ 81 via a torque transmitting link element 83. The actuation organ 82 can be connected to the extension section 8b, for example, to a guide track 85 provided at the extension section 8b via a couple link 84 providing a hinge point G. The guide track 85 can run along roller elements 86 of the telescoping arrangement 80 for facilitating the movement of the extension section 8b relative to the main section 8b in the transverse direction Y.

Fig. 25 shows a schematic top view of a mechanical substitution model of the embodiment of the high lift body arrangement 4 comprising the high lift body 8 having the main section 8a and the extension section 8b in the deployed position T and expanded position V. The hinge organs 30 of the support stations 50 have moved into the deployed position T such that they have assumed the actuation angle α with respect to the front spar 6 of the main body 5 of the wing 3. Synchronously, the extension section 8b has been moved into expanded position V out of the guidance 82 by means of the actuation organ 81 via the couple link 84 connecting to the hinge organ 30 via the torque transmitting link element 83.

### List of Reference Signs

- 1: apparatus / aircraft
- 2: fuselage
- 3: wing
- 4: high lift body arrangement / high lift body device
- 5: main body
- 5a: fixed section
- 5b: foldable section
- 6: spar / front spar (main body)
- 7: leading-edge
- 8: high lift body
- 8a: main section
- 8b: extension section
- 9: gap

- 10: support assembly
- 11: spar (high lift body)

- 20: drive organ / drive unit
- 21: motor control unit
- 22: power control unit
- 23: transmission line
- 24: linear actuator
- 25: rotary actuator

- 30: hinging organ / actuation organ
- 31: drive strut
- 32: link element
- 33: hinge arm
- 33a: upper arm section
- 33b: lower arm section
- 34: link joint
- 35: spar bracket
- 35a: base section
- 35b: joint section
- 36: spar joint
- 37: device bracket
- 37a: attachment section
- 37b: joint section
- 38: device joint
- 39: intermediate joint
- 40: deflection organ / actuation lever / strut

- 50: support station
- 51: master station
- 52: slave station
- 53: sub-master station
- 54: fixed station
- 55: floating station

- 60: deflection limiter
- 61: limiting element
- 62: counter limiting element
- 63: first limit stop
- 64: second limit stop
- 80: telescoping arrangement/ actuation arrangement
- 81: actuation organ
- 82: guidance
- 83: torque transmitting link element
- 84: couple link
- 85: track
- n: neutral position
- p: nominal position

- A: first support station
- B: second support station
- C: third support station
- D: fourth support station
- D': fifth support station
- D": sixth support station
- E: motion path
- F: travel direction / direction of flight
- G: hinge point
- G': hinge point / toggle point
- H: mounting plane
- I: forward component
- J: downward component
- K: bracket
- L: lateral component
- M: rotational axis / middle axis
- N: rotation point
- O: fixed bearing
- P: deployment plane
- Q: floating bearing
- R: drive mounting point
- S: stowed position
- T: deployed position
- U: retracted position
- V: expanded position
- W: joint plane
- X: longitudinal direction
- Y: transverse direction
- Z: height direction

- α: actuation angle
- β: opposite angle
- δ: deployment angle

## Claims

1. Support assembly (10) for a high lift body (8), in particular a leading-edge-slat, configured to be mounted to a spar (6) of a wing (3) of an aircraft (1), comprising at least two hinging organs (30) each providing at least one hinge point (G) configured for hinging the high lift body (8) at the spar (6) movably between a stowed position (S) and a deployed position (T) along a motion path (E) involving a translatory component (I, J, L) extending within a deployment plane (P) extending transversely with respect to a mounting plane (H) provided by the spar (6) for mounting the hinging organs (30) to the spar (6).

2. Support assembly (10) according to claim 1, wherein the motion path (E) involves a downward component (J), a lateral component (L) and/or a forward component (I) with respect a travel direction (F), respectively, of the aircraft (1).

3. Support assembly (10) according to claim 1 or 2, wherein translatory components (I, J, L) provided by the at least two hinging organs (30) have different lengths when moving the high lift body (8) from the stowed position (S) into the deployed position (T).

4. Support assembly (10) according to at least one of claims 1 to 3, wherein each of the at least two hinging organs (30) provides at least two rotational axes (M) for enabling the translatory component (I, J, L).

5. Support assembly (10) according to at least one of claims 1 to 4, wherein at least one of the at least two hinging organs (30) is configured as a folding hinge for folding the support assembly (10) in a folded state between the high lift body (8) and the spar (6).

6. Support assembly (10) according to at least one of claims 1 to 5, further comprising spar brackets (35) having a base section (35a) for mounting the support assembly to the spar (6) of the wing (3) and providing a spar joint (36) angled with respect to the base section (36a) under a deployment angle (δ) of the deployment plane (P) with respect to a front face of the spar (6).

7. Support assembly (10) according to at least one of claims 1 to 6, further comprising device brackets (37) having an attachment section (37a) for attaching the high lift body (8) to the support assembly (10) and providing a device joint (38) angled with respect to the attachment section (37a) under an opposite angle (β) inclining the high lift body (8) upward with respect to the spar (6).

8. Support assembly (10) according to claim 6 and 7, wherein the deployment angle (δ) and the opposite angle (β) constitute vertically opposite angles.

9. Support assembly (10) according to at least one of claims 1 to 8, wherein the at least two hinging organs (30) include at least one master station (51) with at least one fixed bearing and at least one floating station (55) with at least one floating bearing (Q) movable with respect to the fixed bearing in a lateral direction of the main body (5) and/or the high lift body (8).

10. Support assembly (10) according to claim 8, wherein the at least one floating station (55) comprises a limiting element (61) limiting a movement at at least one hinge point (G) provided by the floating bearing (Q).

11. High lift body arrangement (4) for a wing (3) of an aircraft (1), comprising at least one high lift body (8), in particular a leading-edge-slat, configured to be attached to a support assembly (10) according to at least one of claims 1 to 10.

12. High lift body arrangement according to claim 11, wherein the high lift body (8) comprises a main section (8a) and an extension section (8b) which is configured to be telescopable with respect to the main section (8a) for elongating a leading edge (7) of the wing (3) in the deployed position (T).

13. High lift body arrangement according to claim 12, wherein a telescoping arrangement (80) for telescoping the high lift body (8) comprises a guide track (85) and/or a bar linkage for telescoping the extension section (8b) configured to be coupled to the support assembly (10) and/or to an actuation assembly for actuating the high lift body (8).

14. Wing (3) for an aircraft (1), comprising at least one high lift body arrangement (4) according to at least one of claims 11 to 13.

15. Aircraft (1) comprising at least one wing (3) according to claim 14.
